## Europäisches Patentamt
## European Patent Office
## Office européen des brevets

(11) Publication number: **0 263 658**
A2

# EUROPEAN PATENT APPLICATION

(21) Application number: 87308795.1

(22) Date of filing: 05.10.87

(51) Int. Cl.⁴: **C 08 F 289/00**
C 08 F 6/14, D 21 H 1/24

(30) Priority: 06.10.86 US 915591    07.11.86 US 928227

(43) Date of publication of application:
13.04.88 Bulletin 88/15

(84) Designated Contracting States:
BE DE ES FR GB IT LU NL

(71) Applicant: GENCORP INC.
One General Street
Akron Ohio 44329 (US)

(72) Inventor: Erickson, David E.
3390 Charring Cross Drive
Stow Ohio 44224 (US)

Sharma, Satish C.
2760 Highline Drive
Mogadore Ohio 44260 (US)

(74) Representative: Armitage, Ian Michael et al
MEWBURN ELLIS & CO. 2/3 Cursitor Street
London EC4A 1BQ (GB)

(54) Modification of protein graft latices.

(57) Subjecting latices of a graft copolymer of a conjugated diene monomer and a vinyl aryl monomer on a protein such as a soy protein to a high energy treatment for freeing entrapped gases reduced the viscosity of and provides substantially a smaller particle size graft copolymer latex.

Bundesdruckerei Berlin

**Description**

MODIFICATION OF PROTEIN GRAFT LATICES

This invention relates to the treatment of grafted protein latices.

The free radical aqueous graft, inter or over copolymerization of a conjugated diene monomer and a vinyl aryl monomer on a protein using an azo initiator produces a latex which exhibits particle groupings which drastically increase the viscosity of the latex especially at low shear rates.

These protein-modified styrene/butadiene latices are high in viscosity when compared to similar latices prepared using surfactants as stabilizers. Such high viscosities make the materials difficult to pump and lead to loss of latex due to holdup on vessel walls, in pipes etc. So, these latices can be made to only about 32-35 percent solids.

It is desirable therefore, that this invention should avoid the difficulties alluded to above and provide a method for making a grafted protein latex having reduced viscosity.

It is also desirable that this invention should provide a grafted protein latex having reduced viscosity.

According to the present invention, a latex of a protein graft copolymerized with a conjugated diene monomer and a vinyl aryl monomer is subjected to a high energy physical treatment for freeing entrapped gasses for a period of time sufficient to reduce significantly the viscosity of the latex and, also, substantially to provide a smaller particle size. Example of high energy physical treatments include homogenisation, and microfluidisation. Preferably, there is not significant reduction in solids content of the latices. In the case of homogenisation preferably no polymer buildup is detected inside the homogenizer. The viscosity reduction is apparently caused primarily by a reduction in the number and size of groupings of primary latex particles which are prevalent in the protein-modified latices. The viscosity reduction does not appear to result from particle agglomeration due to shear. Reduced viscosity facilitates pumping and handling in further operations like preparing compositions for paper coatings and the like.

The graft copolymerization is done in alkaline aqueous media. The protein is dissolved or rendered finely divided (colloidal suspension) in aqueous ammonium hydroxide or other suitable aqueous alkaline material before polymerization is initiated by an azo initiator. In the graft copolymerization the conjugated diene monomer is used in an amount of from about 25 to 50 parts by weight, the vinyl aryl monomer is used in an amount of from 30 to 60 parts by weight and the protein is used in an amount of from 10 to 30 parts by weight, the total of all three ingredients being 100 parts by weight. In this graft polymerization process, added emulsifiers, colloids or surfactants are not needed.

Proteins, of course, in various forms are well known materials and have many uses. Please see "Enclocopedia of Polymer Science and Technology," John Wiley & Sons, Inc., Vol. 2 (1965), Vol. 8 (1968), Vol. 9 (1968), Vol. 11 (1969) and Supplement Vol. 2 (1977).

For example, they may be obtained as hydrolyzed collagen from fish and animal skin and bones, as albumen from blood and egg white, as casein from milk, as the gluten fractions from corn and wheat and/or the proteins derived from seeds and like such as soy beans, e.g., soy protein (preferred).

Examples of copolymerizable conjugated diene monomers which can be used are those diene monomers of from 4 to 6 carbon atoms such as butadiene-1,3 (preferred), isoprene, 2,3-dimethyl butadiene-1,3, piperylene, chloroprene and so forth and mixtures thereof. Examples of copolymerizable vinyl aryl monomers are those having from 8 to 12 carbon atoms such as styrene, 3-ethyl styrene, methyl vinyl toluene and para vinyl toluene and the like and mixtures thereof.

A chelating agent is used in a very minor amount sufficient to chelate any interfering ions such as the ferric or ferrous ion, or other polymerization-interfering ion or material. In general it is used in an amount of from about 0.01 to 1.0, preferably about 0.05 part by weight per 100 parts by weight of the diene monomer, vinyl aryl monomer and protein. Examples of some chelating agents are trisodium ethylene tetraacetate dihydrate (preferred), ethylenediaminetetraacetic acid tetrasodium salt, technical ethylenediaminetetraacetic acid tetrasodium salt, ethylenediaminetetraacetic acid tetrasodium salt, ethylenediaminetetraacetic acid tetrasodium salt dihydrate, ethylenediaminetetraacetic acid trisodium salt monohydrate, ethylenediaminetetraacetic acid disodium salt dihydrate, ethylenediaminetetraacetic acid, nitrilotriacetic acid disodium salt monohydrate, nitrilotriacetic acid, N-hydroxyethylethylenediaminetriacetic acid trisodium salt, N-hydroxyethylethylenediaminetriacetic acid trisodium salt dihydrate, ethyanoldiglycine disodium salt (or disodium N-hydroxyethyliminodiacetic acid), diethanolglycine sodium salt (or sodium dihydroxyethyl glycine) and the like and mixtures of the same.

The initiator or catalyst used is an oil-soluble azo initiator or catalyst. Azo initiators for free radical polymerization are well known. In this connection, please see the "Encyclopedia of Polymer Science and Technology," Vol. 2, 1965, pages 278-295, John Wiley & Sons, Inc. Of these initiators it is preferred to use the azonitriles. Examples of some of these compounds are azobisdimethylvaleronitrile, 2,2'-azobisisobutyronitrile (preferred), 2,2'-azobis-2-methylbutyronitrile and 2,2'-azobis (methylisobutyrate) and the like and mixtures of the same. Only minor amounts by weight of the initiator are necessary to effect copolymerization.

Chain transfer agents or modifiers are used during the graft copolymerization to control molecular weight, gel and so forth. While various modifiers or chain transfer agents have been proposed and may be used such as benzene, toluene, triphenyl methane, carbon tetrachloride and so forth, it is preferred to use mercaptans such as the alkyl and/or aralkyl mercaptans of from 8 to 18 carbon atoms of which the tertiary alkyl mercaptans are much preferred. Examples of some mercaptans are n-octyl mercaptan, n-dodecyl mercaptan, t-octyl mercaptan, t-dodecyl mercaptan (also preferred), p-tridecyl mercaptan, tetradecyl mercaptan, hexadecyl mercaptan and so forth and mixtures thereof. These modifiers are used generally in a total amount of from about 0.15 to 0.9 phm (parts by weight per 100 parts monomers).

Temperatures used during graft copolymerization should be sufficient to effect polymerization by activation of the catalyst and double bonds of the monomer(s). They should not be too high to cause a runaway reaction and not too low to retard polymerization. In general, the temperature is preferably from about 40 to 80°C. Times for polymerization may vary from about 8 to 14 hours depending on the degree of polymerization desired. Generally, it is desired to carry polymerization to about 100% conversion.

The graft copolymerization should be conducted under alkaline conditions utilizing materials like NH4OH and the like. In general, the pH of the polymerization media should be from about 8.5 to 10, preferably from about 9 to 9.5.

The water used during graft copolymerization should be free of deleterious materials and preferably should be distilled or ion exchanged. Sufficient water is used to enable maintenance of the emulsion or latex and to enable proper mixing or stirring of the ingredients during polymerization to obtain the desired rate and degree of polymerization, heat transfer and so forth. The solids content in the water may be from about 30 to 40% by weight.

Graft copolymerization should be conducted in a closed reactor, such as a pressure reactor, fitted with a stirrer or other agitating means, evacuating means, heating and cooling means, with means to flush with or pump in an inert gas such as nitrogen, helium, argon, neon and the like if desired, with means to charge monomers, water, initiators, venting means, and with means to recover the polymer and so forth. The reactor should be cleaned or flushed between polymerization runs to remove traces of initiators, modifiers, residues and so forth which might interfere with subsequent polymerizations. There should be sufficient agitation or stirring of the polymerization media to ensure thorough mixing, diffusion, contact and so forth.

Free radical aqueous polymerization and copolymerization of ethylenically unsaturated monomers are well known to those skilled in the art. In this connection, please see Whitby et al, "Synthetic Rubber," John Wiley & Sons, Inc., New York, 1954; Bovey et al, "Emulsion Polymerization," High Polymers, Vol. IX, Interscience Publishers, Inc., 1955; Schildknecht, "Vinyl and Related Polymers," John Wiley & Sons, Inc., New York, 1952 and "Encyclopedia of Polymer Science and Technology," Vol. 3 (1965), Vol. 5 (1966), Vol. 7 (1967), Vol. 9 (1968) and Vol. 11 (1969), Interscience Publishers, a division of John Wiley & Sons, Inc., New York.

In the practice of the present invention, the polymerization may be considered as a graft copolymerization, over copolymerization, core/shell copolymerization or an interpolymerization. The technique of polymerizing or copolymerizing one or more monomers in the presence of a polymer or a substrate, "grafting technique," is known and is frequently called graft polymerization or graft copolymerization. In this connection, please see "Proceedings of the Third Rubber Technology Congress," 1954, W. Heffer & Sons, Ltd., Cambridge, pages 185-195; "Copolymerization," High Polymers, Vol. XVIII, Ham, Interscience Publishers, a division of John Wiley & Sons, New York, 1964; "Block and Graft Polymers," Burlant and Hoffman, Reinhold Publishing Corporation, New York, 1960; "Block and Graft Copolymers," Ceresa, Butterworth & Co. (Publishers) Ltd., London, 1962; "Block and Graft Copolymerization," Ceresa, Vol 1 (1973) and Vol. 2 (1976), John Wiley & Sons, Ltd., New York, and "Graft Copolymers," Polymer Reviews, Vol. 16, Battaerd and Tregear, Interscience Publishers, a division of John Wiley & Sons, New York, 1967. The graft copolymer may contain all graft copolymer but also may be a mixture of homopolymers, copolymers as well as the graft itself, depending on the rate of polymerization of the monomers, the polymerization conditions and so forth.

The graft copolymer latices of the present invention can be treated during or after polymerization with antioxidants, biocides, defoamers, additional alkaline material such as NH4OH and so forth.

All of the graft copolymerization ingredients may be charged to the reactor at once and graft copolymerization continued to completion, or a seed type of latex may be formed by first graft copolymerizing part of the conjugated diene monomer and vinyl aryl monomer on the protein in the presence of some of the polymerization materials followed by the further additions of the conjugated diene monomer and vinyl aryl monomer along with the remaining polymerization materials.

In homogenization, the latex is subjected to extremely high velocity shear by passing the latex under pressure through a small, restricted orifice whereby the latex is subjected to instantaneous acceleration to high velocities, extreme turbulence combined with cavitation and preferably impingment. In normal practice this may be done in a commercially available homogenizer such as a Manton-Gaul in homogenizer. Such homogenizers are, practically speaking, high-pressure, positive displacement plunger pumps which force the latex through a small, restricted orifice, the area of which may be changed. This is usually accomplished by varying the compression of a valve against the mating members of the orifice. Operating pressures of up to 8000 psi are possible.

For more information on homogenization and homogenizers, please see Kirk-Othmer, "Encyclopedia of Chemical Technology," John Wiley & Sons, New York, Third Edition, Vol. 8, 1979, pages 921 and 923 and Third Edition, Vol. 15, 1981, pages 528 to 530.

The microfluidisation technique is based on a submerged jet principle in which two fluidised streams interact in microchannels in an interaction chamber.

The homogenized or microfluidised latices of the present invention can be mixed with finely divided fillers or pigments such as paper coatings fillers or pigments like clays, kaolin, calcium carbonate, titanium dioxide, zinc oxide and other inorganic fillers used in paper coating compositions. Thickening agents, viscosity stabilizers, additional alkaline material like $NH_4OH$ and so forth can be added to these compositions. In general, paper coating compositions of the present invention will have a solids content of from about 20 to 70% by weight, the solids comprising from about 2 to 20% by weight, on a dry weight basis, of the graft copolymer and from 98 to 80% by weight of the paper coating fillers. The paper coating composition may be spread on paper and hot calendered to cure or set the graft copolymer and form an adherent and dried coating on the paper. For example, in some paper coating latices an acid containing comonomer is used, but here, such a -COOH containing monomer is not needed. In using the latex in a paper coating composition additional cobinder is not required. The latex is useful as a binder for pigmented paper coating compositions to be printed by gravure or offset printing processes and is particularly useful in compositions for lightweight paper to be printed by the gravure process. The latex, also, can be used in compositions for cylinder boards.

The following examples will serve to illustrate the present invention with more particularity to those skilled in the art.

The general recipe used in making the protein-modified styrene-butadiene latices or grafts of styrene and butadiene on the protein are shown in Table I, below:

### Table I

| Ingredient | Parts (active, dry weight) |
| --- | --- |
| Styrene | 40 |
| Butadiene-1,3 | 41.5 |
| Soy Protein | 14.4 to 18.5* |
| SULFOLE 120 | .45 |
| SEQUESTRENE $Na_3$ | .05 |
| VAZO 64 | .6 |
| DREW L-198 | .1 |
| Deionized Water | to desired solids content (32-43% solids) |

*The protein solutions used were made to contain 1.08p. PROXEL GXL/100p (dry weights) protein to protect against bacterial

The polymerization procedure was as follows:

To a clean, $N_2$ flushed reactor were charged the deionized water, the SEQUESTRENE $Na_3$ and the soy protein, with the DREW L-198 at a pH of from about 9 to 9.5. The temperature of the mixture was raised to 150°F (65.6°C), and the reactor was evacuated minimally to avoid losing $NH_4OH$. Next there were added to the reactor part of the styrene containing the VAZO 64 followed by part of the SULFOLE 120 and part of the butadiene-1,3, and polymerization was conducted to a total solids content of from about 14 to 16% by weight. Additional increments of styrene, SULFOLE 120 and butadiene-1,3 were added to the reactor to obtain a final theoretical solids content of the latex of about 32.2%. The reactor was cooled, and the latex was stripped of residual monomers. During this graft copolymerization the total amounts added of butadiene-1,3 were 41.5 parts, of SULFOLE 120 were 0.45 part and of styrene were 40.0 parts. The polymerization was conducted at a pH of 9 to 9.5

Several graft latices were prepared using the above recipe. Some of the graft latices were used as seed latices; however in the final latex, the proportions of monomers and protein were essentially the same.

Notes for the polymerization procedure:

SEQUESTRENE $Na_3$    Trisodium ethylene diamine tetraacetate dihydrate. Ciba-Geigy Corp.

SULFOLE 120    t-dodecyl mercaptan, avg. mol. wt. 198, calc. purity wt. % 96.8 and mercaptan sulfur wt. % 15.4. Phillips Petroleum Co., Rubber Chem. Div.

DREW L-198    Emulsifiable mixture of mineral oil, silica derivatives and esters. Defoamer. Drew Chemical Corp.

PROXEL GXL    Chemical biocide. ICI Americas Inc.

VAZO 64    2,2'-azobisiobutyronitrile or $(CH_3)_2(CN)CN = NC(CN)(CH_3)_2$. duPont.

The homogenizer used in the following runs was a Model 25 MBA Laboratory Homogenizer manufactured by Manton Gaulin Manufacturing Co. (now Gaulin Corporation), Everett, Massachusetts. The unit was operated at 2000 psig in all of the runs, although it is capable of being used at pressures up to 5000 psig. The throughput rate through the homogenizer was 25 gallons/hour (ca 1.6 1/min.). In microfluidisation experiments the latex treatment was carried out in a Microfluidics Model M-110 with cooling capability (ice water) and with a back-flusing system. A prefilter was inserted before the interaction chamber since a preliminary experiment indicated some pressure build-up in the apparatus. The treatment was done at 100 psig. Either one or three passes were made through the apparatus.

Single point viscosity measurements were made with a Brookfield LVF viscometer at 60 rpm (using different spindles, depending on the viscosity of the product). Also, viscosities were measured over a range of shear rates using the Haake Rotovisco viscometer, Model RV100.

Paricle size measurements were made using a NiComp Model 200 Laser Particle Sizer, produced by NiComp Instrument, Santa Barbara, California.

Soy proteins were obtained from the Ralston Purina Company (St. Louis, MO) and were solubilized to 20% solids in ammonium hydroxide.

The results on testing the homogenized styrene-butadiene protein graft latices are shown in the following tables:

## Table II
### Effect of Homogenization[1] on Latices

| Latex No. | Homogenized | Percent[2] Solids | Brookfield Viscosity (60 rpm) cps |
|---|---|---|---|
| 1 | No | 32.4 | 100 |
| 2 | Yes | 32.4 | 56 |
| 3 | No | 31.6 | 35.5 |
| 4 | Yes | 31.2 | 14.0 |
| 5 | No | 37.9 | 237 |
| 6 | Yes | 37.8 | 55 |

### Table II (Cont'd)
#### Haake Rotovisco

| Latex No. | Viscosities (mPa sec) 270 sec.$^{-1}$ | 2700 sec$^{-1}$ |
|---|---|---|
| 1 | 29.7 | 18.0 |
| 2 | 14.6 | 11.5 |
| 3 | 21.8 | 14.9 |
| 4 | 12.0 | 9.4 |
| 5 | 65.9 | 35.3 |
| 6 | 34.0 | 21.1 |

### Table II (Cont'd)
#### NiComp Size Data

| Latex No. | First Peak Diameter(nm) | Wt.% | Second Peak Diameter(nm) | Wt.% | Mean Diameter(nm) |
|---|---|---|---|---|---|
| 1 | - | - | - | - | - |
| 2 | - | - | - | - | - |
| 3 | 54.5 | 13 | 158 | 87 | 141 |
| 4 | - | - | 143 | 100 | 143 |
| 5 | 54.5 | 13 | 158 | 87 | 145 |
| 6 | 115 | 90 | 231 | 10 | 128 |

1) Homogenizations were conducted on 1000 ml samples of the latices at 2000 psig with continuous recycling at a throughput rate of 25 gallons/hour (ca 1.6 liters latex/minute) for 25-30 minutes. Thus, the average number of passes through the homogenizer was ca. 45.

2) Includes monomers, PP2500 protein, and minor ingredients per the recipe in Table I. The protein level in these latices was 18.5 parts.

Soy protein    Anionic carboxylated soy protein in powder form. At 20% solids in alkaline media it has a Brookfield viscosity of about 2500 RVT (10 RPM) at 25°C, Ralston Purina Company Polymer PP2500. See U.S. Pat. No. 4,474,694.

mPa    Millipascal

nm    Nanometer

Table III

Effect of Homogenization[1] on Styrene-Butadiene Graft Latices

Containing Different Amounts of PP2500 Protein

| Latex No. | Total Percent Protein In Binder | Homogenized | Latex Percent Solids | Brookfield Viscosity (60 rpm) |
|---|---|---|---|---|
| 10 | 18.5 | No | 31.7 | 193 |
| 11 | 18.5 | Yes | 32.0 | 32.0 |
| 12 | 14.1 | No | 39.8 | 708 |
| 13 | 14.1 | Yes | 38.1 | 38.1 |
| 14 | 17.8 | No | 39.9 | 804 |
| 15 | 17.8 | Yes | 38.8 | 38.8 |
| 16 | 14.1 | No | 43.5 | 2550 |
| 17 | 14.1 | Yes | 41.7 | 41.7 |

Table III (Cont'd)

| Latex No. | Haake Rotovisco Viscosities (mPa sec) | |
|---|---|---|
| | $270 \text{ sec.}^{-1}$ | $2700 \text{ sec}^{-1}$ |
| 10 | 63.3 | 30.9 |
| 11 | 23.7 | 16.0 |
| 12 | 130 | 52.4 |
| 13 | 41.9 | 23.8 |
| 14 | 150 | 65.0 |
| 15 | 56.7 | 33.6 |
| 16 | 263 | - |
| 17 | 101 | 46.3 |

8

### Table III (Cont'd)

| Latex No. | NiComp Size Data | | | | |
| | First Peak | | Second Peak | | Mean |
| | Diameter(nm) | Wt.% | Diameter(nm) | Wt.% | Diameter(nm) |
|---|---|---|---|---|---|
| 10 | 120 | 72 | 250 | 28 | 151 |
| 11 | 125 | 92 | 300 | 8 | 138 |
| 12 | 150 | 93 | 600 | 7 | 199 |
| 13 | 100 | 41 | 167 | 58 | 142 |
| 14 | 150 | 82 | 3000 | 18 | 406 |
| 15 | 158 | 100 | - | - | 145 |
| 16 | 167 | 100 | - | - | 148 |
| 17 | 143 | 90 | 333 | 10 | 156 |

1) Same homogenization conditions as indicated in Table II.
Latices 10 and 11 were seed latices.  Seed latex 11 after
homogenization was used in the polymerization of latices 12
to 17 with the addition of more butadiene-1,3 and styrene in
the same ratios and varying amounts of the same protein and
other polymerization materials (see Table I).

Table IV

Effect of Homogenization[1] on Styrene-Butadiene Graft Latices

Containing Different Proteins

| Latex No. | Protein[2] | Homogenized | Latex Percent Solids | Brookfield Viscosity (60 rpm) |
|---|---|---|---|---|
| 20 | PP2500 | No | 31.3 | 674 |
| 21 | PP2500 | Yes | 30.7 | 42 |
| 22 | ProCote 200 LV | No | 31.1 | 1420 |
| 23 | ProCote 200 LV | Yes | 30.3 | 54 |
| 24 | ProCote 400 | No | 31.1 | 870 |
| 25 | ProCote 400 | Yes | 30.4 | 61 |
| 26 | PP4000 | No | 31.3 | 2700 |
| 27 | PP4000 | Yes | 30.4 | 199 |

Table IV (Cont'd)

| | Haake Rotovisco Viscosities (mPa sec) | |
|---|---|---|
| Latex No. | $270 \ sec.^{-1}$ | $2700 \ sec^{-1}$ |
| 20 | 94.9 | 42.9 |
| 21 | 24.4 | 15.8 |
| 22 | 208 | - |
| 23 | 26.2 | 16.9 |
| 24 | 144 | 56.9 |
| 25 | 30.3 | 18.8 |
| 26 | 273 | - |
| 27 | 60.7 | 28.4 |

Table IV (Cont'd)

| | NiComp Size Data | | | | |
| | First Peak | | Second Peak | | Mean |
| Latex No. | Diameter(nm) | Wt.% | Diameter(nm) | Wt.% | Diameter(nm) |
| 20 | 107 | 63 | 214 | 37 | 146 |
| 21 | 107 | 79 | 200 | 21 | 126 |
| 22 | 107 | 63 | 273 | 37 | 174 |
| 23 | 53.5 | 23 | 150 | 77 | 129 |
| 24 | 53.5 | 27 | 150 | 73 | 128 |
| 25 | 125 | 91 | 273 | 9 | 142 |
| 26 | 111 | 83 | 429 | 17 | 178 |
| 27 | 115 | 84 | 333 | 16 | 147 |

1) Homogenization conducted as indicated in Table II.

2) The recipe of Table I was used for these latices. Soy proteins were obtained as granular solids from the Ralston Purina Company, St. Louis, MO. Proteins were used as 20% solutions, solubilized by heating in combination with enough ammonia to give a pH of 9 to 9.5.

## Table V
## Effect of Latex Homogenization Treatment
## on Pigmented Coating[1] Rheology

| | Viscosities (mPa sec), at 25°C | |
|---|---|---|
| | Latex No. 5 | Latex No. 6 |
| Shear Rate (sec$^{-1}$) | Unhomog. | Homog. |
| 117 | 490 | 438 |
| 234 | 250 | 256 |
| 351 | 177 | 184 |
| 468 | 151 | 145 |
| 585 | 138 | 122 |
| 702 | 132 | 107 |
| 819 | 128 | 98 |
| 936 | 127 | 90 |
| 1053 | 129 | 86 |
| 1170 | 132 | 83 |

## Table V (Cont'd)

| | Viscosities (mPa sec), at 25°C | |
|---|---|---|
| | Latex No. 14 | Latex No. 15 |
| Shear Rate (sec$^{-1}$) | Unhomog. | Homog. |
| 117 | 622 | 600 |
| 234 | 440 | 411 |
| 351 | 382 | 331 |
| 468 | 343 | 288 |
| 585 | 314 | 254 |
| 702 | 293 | 230 |
| 819 | 275 | 211 |
| 936 | 268 | 196 |
| 1053 | 266 | 184 |
| 1170 | 266 | 179 |

1) 66% solids coatings containing 100 parts of SPRAY SATIN clay, 0.05 part tetrasodium pyrophosphate and 12 parts (active, dry weight basis) of styrene-butadiene protein-modified latices.

Table II shows the effects of homogenization on latices prepared in stirred reactors. The homogenization was found to decrease the Brookfield (low shear rate) and Haake viscosities. Proportionally, the greatest viscosity reductions occurred at the lowest shear rates. Viscosity reductions in the range of 49 to 77% were observed in the Brookfield viscosities. Essentially no reduction in latex solids was found in this series, and the homogenizer showed no buildup of solid material.

Homogenization similarily reduced the viscosities of a series of latices made in one quart polymerization bottles as shown in Table III. The extent of viscosity reductions at low shear rates are much greater in this group of latices, presumably because of the differences in shear pattern which are found in the tumbled bottles and the stirred reactors. This difference seems to lead to a greater extent of the "reversible" agglomeration in the bottle-polymerized latices, causing the high viscosities at lower shear rates. However, some of the particle groupings must be present even in the latices made in stirred reactors, and these groupings can be broken up by the shear occurring in the homogenizer.

Table IV shows data on latices made using four different soy proteins, with the polymerizations being carried out in one quart polymerization bottles at 65.5°C. In this group of latices, the homogenization caused reductions in Brookfield viscosity of about 95% for each of the latices, while the viscosity reduction at higher shear rates was less dramatic. The solids content of each latex seems to have been reduced about the same amount. This apparent solids reduction is not real, but is due to a small amount of rinse water being inadvertently retained in the homogenizer after cleaning out the previous latex. No buildup of solid polymer in the homogenizer was found, so seemingly only insignificant coagulation and polymer loss occurred with this type of latex.

When the homogenized latices were used as binders in high solids pigmented coatings, the viscosities were also reduced, as shown in Table V for two of the latices. In this case, the greatest effects on viscosity were observed at the highest shear rates. Also, the tendency toward dilatancy at the highest shear rate was reduced or eliminated.

The application of pigment coatings to paper at high throughput rates requires that the coatings have "good" rheology at high shear rates. That is, the coating should be shear thinning, and not develop dilatancy. Rheological measurements on a limited number of high solids coatings indicated a possible improvement in runability with the homogenized latices.

The following tables (Tables VI and VII) indicate the effects of microfluidisation on rheology (Table VI) and particle size (Table VII) of protein modified styrene- butadiene latices. Comparative results using homogenisation, or an alternative, sonication, technique are also shown.

13

## TABLE VI
## Effects of Microfluidization on Rheology of Protein Modified
### Styrene Butadiene Latices

| Latex Sample | Treatment | No. of Passes Through Microfluidizer | Percent Solids |
|---|---|---|---|
| A-1 | - | - | 31.7 |
| A-2 | Microfluidized[1] | 1 | 31.6 |
| A-3 | Microfluidized[1] | 3 | 31.5 |
| A-4 | - | - | 31.7 |
| A-5 | Sonified[2] | - | 32.1 |
| A-6 | - | - | 31.6 |
| A-7 | Homogenized[3] | - | 31.2 |
| B-1 | - | - | 38.0 |
| B-2 | Microfluidized[1] | 1 | 37.8 |
| B-3 | Microfluidized[1] | 3 | 38.0 |
| B-4 | - | - | 37.9 |
| B-5 | Homogenized[3] | - | 37.8 |
| C-1 | - | - | 39.9 |
| C-2 | Microfluidized[1] | 1 | 39.6 |
| C-3 | Homogenized[3] | - | 38.8 |

TABLE VI (cont'd)

| Latex Sample | Brookfield Viscosity (60 rpm) | | Haake Rotovisco[4] Viscosities (mPa sec) | |
|---|---|---|---|---|
| | Viscosity(cps) | % Reduction | 270 sec$^{-1}$ | 2700 sec$^{-1}$ |
| A-1 | 44 | - | 27.2 | - |
| A-2 | 15.5 | 65 | 11.9 | 9.9 |
| A-3 | 16.1 | 63 | 11.9 | 9.8 |
| A-4 | 68 | - | 33.0 | 19.7 |
| A-5 | 40 | 41 | 13.3 | 10.9 |
| A-6 | 35.5 | - | 21.8 | 14.9 |
| A-7 | 14.0 | 61 | 12.0 | 9.4 |
| B-1 | 642 | - | 119 | 54.1 |
| B-2 | 159 | 75 | 56.7 | 30.3 |
| B-3 | 150 | 77 | 56.4 | 30.0 |
| B-4 | 237 | - | 65.9 | 35.3 |
| B-5 | 54.9 | 77 | 34.0 | 21.1 |
| C-1 | 804 | - | 150 | 65.0 |
| C-2 | 159 | 80 | 52.4 | 30.6 |
| C-3 | 144 | 82 | 57 | 34 |

mPa = millipascal

1. Microfluidization conducted at 100 psig, 300-500 ml/min nominal flow rate.

2. Sonication was ten minute treatment with Sonifier Model S75, Branson Instrument Company; temperature maintained at room temperature by ice water cooling.

3. Homogenization was at 2000 psig in a Manton-Gaulin Laboratory Homogenizer (about 1.6 liter/min. flow rate, continuous circulation of 1000 ml sample for about 30 minutes, until the temperature reached 65°C.)

4. NV Rotor, 25°C.

Three different latex batches based on the recipe shown in Table 1 were used. Samples were taken at various times from each of these batches and labeled A-1 to A-7, B-1 to B-5 and C-1 to C-3. The times of taking samples and testing can explain some differences in initial solids contents due to aging of the batches.

Viscosity data obtained on the Microfluidized latices are given in Table VI above. Also shown are viscosities obtained on latices treated with ultrasonic irradiation or by homogenization, and the percent reduction in viscosity due to the particular treatment.

One pass through the Microfluidizer was shown to be about as effective as three passes in reducing latex viscosity. The Haake results indicate that the Microfluidization process is as effective as either sonication or homogenization in reducing the viscosity. Some reduction in the viscosity of the untreated latices was seen with aging time over a period of several months. For example, compare A-4, A-1 and A-6 or B-1 and B-4. However, the relative reductions in viscosity obtained at any given time using the homogenization and microfluidization seem equivalent with perhaps a lower relative reduction observed in the sonicated latex (after 10 minutes treatment).

The lower shear viscosities (Brookfield and 270 sec$^1$ Haake results) show greater reductions on treatment than the high shear rate values. This is interpreted as being caused by a breakdown in structure in the latices, which structure contributes primarily to the low shear viscosities.

### TABLE VII

#### Nicomp Particle Size Results on Microfluidized Latices

| Sample Latex | Number of Passes | Bimodal Distribution First Peak | |
|---|---|---|---|
| | | Avg. Diam. (nm) | wt % |
| A-1 | 0 | 111 | 57 |
| A-2 | 1 | -- | - |
| A-3 | 3 | 143 | 91 |
| B-1 | 0 | 109 | 22 |
| B-2 | 1 | 158 | 100 |
| B-3 | 3 | 158 | 100 |
| C-1 | 0 | 88 | 58 |
| C-2 | 1 | 156 | 100 |

## TABLE VII (cont'd)

| Sample Latex | Bimodal Distribution Second Peak Avg. Diam.(nm) | wt % | Mean Diameter (nm) | Equivalent Gaussion Distribution Mean Diam. (nm) |
|---|---|---|---|---|
| A-1 | 273 | 43 | 182 | 180 |
| A-2 | - | - | - | 149 |
| A-3 | 429 | 9 | 166 | 138 |
| B-1 | 214 | 78 | 197 | 193 |
| B-2 | - | - | 158 | 145 |
| B-3 | - | - | 157 | 138 |
| C-1 | 273 | 42 | 182 | 191 |
| C-2 | - | - | 156 | 145 |

nm = nanometer

In Table VII are summarized the particle size results obtained on the Microfluidized latices. These results indicate reductions in mean particle diameter caused by reductions in the size and/or amount of "large" particles in the latices. This light scattering technique interprets groups of particles as being single large particles. Breakup of such particle groupings would give these results.

In summary, microfluidization and homogenisation are shown to be effective techniques for reducing the viscosity of protein-modified styrene-butadiene latices.


**Claims**

1. A method which comprises subjecting an alkaline latex of a graft or over copolymer of at least one copolymerizable conjugated diene monomer having from 4 to 6 carbon atoms and at least one copolymerizable vinyl aryl monomer having from 8 to 12 carbon atoms on a protein to a high energy physical treatment for freeing entrapped gases for a period of time sufficient to reduce the viscosity of and substantially to reduce the particle size of said latex, wherein

(a) said conjugated diene monomer is used in an amount of from about 25 to 50 parts by weight,

(b) said vinyl aryl monomer is used in an amount of from 30 to 60 parts by weight, and

(c) said protein is used in an amount of from 10 to 30 parts by weight, the sum of (a), (b) and (c) being 100 parts by weight.

2. A method according to claim 1 wherein the high energy physical treatment is homogenisation.

3. A method according to claim 1 wherein the high energy physical treatment is microfluidisation.

4. A method according to any one of claims 1-3 where said conjugated diene monomer is butadiene-1,3, said vinyl aryl monomer is styrene and said protein is soy protein.

5. The product as produced by the method of any one of the preceding claims.

6. A paper coating composition exhibiting reduced viscosity at high shear rates and comprising an aqueous dispersion of from about 20 to 70% by weight of solids, the solids comprising from about 2 to 20% by weight on a dry weight basis of a graft copolymer and from 98 to 80% by weight of paper coating fillers or pigments, said graft copolymer being in the form of a latex as produced by the method of any one of claims 1-4.

7. The paper coating composition according to claim 6 where said conjugated diene monomer is butadiene-1,3, said vinyl aryl monomer is styrene and said protein is soy protein.